# EUROPÄISCHE PATENTANMELDUNG

(11) **EP 2 145 565 A2**
(43) Veröffentlichungstag der Anmeldung: **20.01.2010**
(21) Anmeldenummer: 08017222.4
(22) Anmeldetag: 30.09.2008
(51) Int. Cl.: A47B 97/04

(54) **Höhenpositioniervorrichtung für eine Präsentationsvorrichtung**

(30) Priorität: 14.07.2008 DE 102008033059
(71) Anmelder: VS Vereinigte Spezialmöbelfabriken GmbH & Co. KG, 97941 Tauberbischofsheim (DE)
(72) Erfinder: Weber, Reinhard, 32425 Minden (DE); Korte, Friedrich, 32429 Minden (DE)
(74) Vertreter: Söltenfuss, Dirk Christian

(57) **Zusammenfassung**

Eine Höhenpositioniervorrichtung für eine Präsentationsvorrichtung enthält einen Träger (16), an dem wenigstens ein Präsentationselement (18, 22) wie beispielsweise eine Projektionstafel und ein Projektor befestigbar ist, und eine Halterung (14), an welcher der Träger (16) zwischen einer ersten und einer zweiten Höhenposition verschiebbar angebracht ist. Ferner sind wenigstens ein flexibles Zugmittel (40, 42), dessen eines Ende an dem Träger (16) bzw. einem mit dem Träger bewegbaren Element (31, 32) befestigt ist und dessen anderes Ende an der Halterung (14) bzw. einem ortsfesten Element (30, 48) befestigt ist, und wenigstens ein Umlenkelement (28), um welches das wenigstens eine Zugmittel (40, 42) in der Art eines Flaschenzuges geführt ist, vorgesehen. Um den Träger (14) an einer beliebigen Position zwischen der ersten und der zweiten Höhenposition zu halten, enthält die Höhenpositioniervorrichtung weiter eine Gasdruckfeder (26), an deren einem Ende das wenigstens eine Umlenkelement (28) befestigt ist und deren anderes Ende so an der Halterung (14) bzw. einem höhenfesten Element (30) oder an dem Träger (16) bzw. einem mit dem Träger bewegbaren Element (31) abgestützt ist, dass die Gasdruckfeder (26) ein Gesamtgewicht des Trägers (14) und des wenigstens einen daran befestigbaren Präsentationselements (18, 22) im Wesentlichen ausgleicht.

## Beschreibung

Die vorliegende Erfindung betrifft eine Höhenpositioniervorrichtung für eine Präsentationsvorrichtung.

Es existieren sowohl ortsfest, d.h. zum Beispiel an einer Gebäudewand angebrachte Präsentationssysteme als auch mobile, d.h. zum Beispiel mit einem verfahrbaren Untergestell versehene Präsentationssysteme. In beiden Fällen ist es von Vorteil, wenn die Präsentationssysteme in ihrer Höhe verstellbar sind, um die Systeme jeweils optimal auf die aktuellen Gegebenheiten abstimmen zu können. Die entsprechenden Höhenpositioniervorrichtungen sollen dabei möglichst einfach zu bedienen sein.

Da vermehrt Präsentationssysteme entwickelt werden, die dem Benutzer flexible Einsatzmöglichkeiten bieten sollen, besteht zunehmend Bedarf an einer gewichtsoptimierten Lösung für solche Höhenpositioniervorrichtungen für Präsentationssysteme. Ein geringeres Gewicht der Höhenpositioniervorrichtung ist sowohl im Fall eines mobilen Präsentationssystems als auch im Fall einer ortsfesten Montage eines Präsentationssystems von Vorteil. Weitere Vorteile ergeben sich bezüglich Transport und Logistik der Höhenpositioniervorrichtungen bzw. der gesamten Präsentationssysteme.

Aus dem Stand der Technik sind verschiedene Präsentationssysteme mit unterschiedlichen Höhenpositionier- bzw. -verstellvorrichtungen bekannt.

So zeigt zum Beispiel die DE 102 48 987 A1 ein mobiles Präsentationseinheit, die eine integrierte elektronische Präsentationseinrichtung aufweist und variabel für Präsentationen in einem begrenzten Teilnehmerkreis eingesetzt werden kann. Diese bekannte Präsentationseinheit weist insbesondere ein verfahrbares Untergestell mit mehreren Stützprofilen und eine Tragkonstruktion zur Befestigung der Präsentationseinrichtung, beispielsweise ein Whiteboard oder eine integrierte Einheit aus Projektionstafel und Projektor, auf.

Die DE 20 2007 010 920 U1 offenbart ein Präsentationssystem mit einer Projektionsfläche und einem an dieser über einen um eine vertikale Achse schwenkbaren Tragarm befestigten Projektor, bei welcher die Projektionsfläche über einen höhenverstellbaren Träger an mehreren Pylonen befestigt und mit Gegengewichten gekoppelt ist. Dieses herkömmliche Präsentationssystem kann wahlweise an einer Wand, an Wandschienen oder auf einem fahrbaren Gestell angeordnet werden.

Ferner beschreibt die noch nicht veröffentlichte deutsche Gebrauchsmusteranmeldung DE 20 2008 002 222.3 der Anmelderin eine mobile Präsentationsvorrichtung, bei welcher die Tragkonstruktion wenigstens einen im Wesentlichen vertikalen Pylonen mit einem Gegengewicht aufweist, an dem ein Träger zwischen einer ersten und einer zweiten Höhenposition verschiebbar angeordnet ist, und die Projektionsfläche und der Tragarm des Projektors jeweils an dem Träger befestigt sind. Außerdem ist der Tragarm vorzugsweise so ausgebildet, dass der Projektor von seiner Betriebsstellung oberhalb der Projektionsfläche nach unten vor die Projektionsfläche abgeklappt werden kann.

Eine weitere höhenverstellbare Pylonentafel ist zum Beispiel aus der DE 20 2006 007 109 U1 bekannt, wobei die Tafelfläche bei diesem System zusätzlich gegenüber den im Wesentlichen vertikalen Pylonen geneigt werden kann.

Da die in bzw. an den Pylonen vorgesehenen Gegengewichte dem Gesamtgewicht des Trägers und der daran angebrachten Präsentationselemente und deren Halterungen im Wesentlichen entsprechen müssen, besitzt die Höhenpositioniervorrichtung in den zuletzt beschriebenen Fällen ein relativ großes Gewicht, was für mobile Präsentationssysteme und ortsfeste Montagen an Wandschienen und dergleichen nachteilig ist.

Neben diesen Tafelsystem und Präsentationssystemen, bei denen die Höhenpositionierung mittels Gegengewichten erfolgt, sind auch solche Systeme bekannt, bei denen die Höhenpositionierung mit Hilfe eines Federmechanismus wie beispielsweise einer Gasdruckfeder realisiert wird.

So zeigt die DE 42 35 764 A1 eine Höhenpositioniervorrichtung mit einer vertikal verschiebbaren Trägerplatte, wobei die Trägerplatte in einer Ausführungsform mit Hilfe einer Gasdruckfeder in der Art eines Wagenhebers in einer gewünschten Höhenposition gehalten werden kann. Dieses System ist bei modernen Präsentationseinrichtungen aufgrund ihres größeren Gewichts nicht mehr geeignet, da die Gasdruckfeder zu große Federkräfte bereitstellen müsste und sehr hohe Anforderungen an die Führung der Trägerplatte zu stellen wären.

Schließlich offenbart die DE-OS 19 18 262 eine stufenlos höhenverstellbare Tafel, welche mittels einer zentral angeordneten Gasdruckfeder und einer symmetrisch aufgebauten Flaschenzugseilanordnung in einer gewünschten Höhenposition an einer Baukörperwand gehalten werden kann. Diese Höhenpositionierung ist integraler Bestandteil einer Schultafel oder dergleichen und somit nicht flexibel für die unterschiedlichen modernen Präsentationselemente einsetzbar.

Es ist eine Aufgabe der vorliegenden Erfindung, eine Höhenpositioniervorrichtung für eine Präsentationsvorrichtung bereitzustellen, die eine einfache Höheneinstellung von Präsentationselementen durch den Benutzer ermöglicht, ein geringes Eigengewicht besitzt und variabel für unterschiedlichste Präsentationssysteme eingesetzt werden kann.

Diese Aufgabe wird gelöst durch eine Höhenpositioniervorrichtung für eine Präsentationsvorrichtung mit den Merkmalen des Anspruchs 1. Vorteilhafte Ausgestaltungen und Weiterbildungen der Erfindung sind Gegenstand der abhängigen Ansprüche.

Die Höhenpositioniervorrichtung für eine Präsentationsvorrichtung der Erfindung weist einen Träger, an dem wenigstens ein Präsentationselement befestigbar ist, und eine Halterung, an welcher der Träger zwischen einer ersten und einer zweiten Höhenposition verschiebbar angebracht ist, auf. Weiter sind wenigstens ein flexibles Zugmittel, dessen eines Ende an dem Träger bzw. einem mit dem Träger bewegbaren Element befestigt ist und dessen anderes Ende an der Halterung bzw. einem höhenfesten Element befestigt ist, und wenigstens ein Umlenkelement, um welches das wenigstens eine Zugmittel in der Art eines Flaschenzuges geführt ist, vorgesehen. Um den Träger mit den daran befestigten Präsentationselementen an einer beliebigen Position zwischen der ersten und der zweiten Höhenposition zu halten, ist weiter ein pneumatischer Kolbenmechanismus vorgesehen, an dessen einem Ende das wenigstens eine Umlenkelement befestigt ist und dessen anderes Ende so an der Halterung bzw. einem höhenfesten Element oder an dem Träger bzw. einem mit dem Träger bewegbaren Element abgestützt ist, dass der Kolbenmechanismus ein Gesamtgewicht des Trägers und des wenigstens einen daran befestigbaren Präsentationselements im Wesentlichen ausgleicht.

Wesentlicher Bestandteil der erfindungsgemäßen Höhenpositioniervorrichtung ist der in der Höhe verschiebbare Träger, an dem das oder die jeweilige(n) Präsentationselement(e) angebracht werden können. Durch diesen Träger wird eine Trennung von Höhenpositioniervorrichtung und Präsentationselement(en) erreicht, sodass eine Höhenpositioniervorrichtung in variabler Weise für unterschiedliche Präsentationsvorrichtungen eingesetzt werden kann, was die Flexibilität der Höhenpositioniervorrichtung erhöht und den Herstellungsaufwand vermindert.

Der pneumatische Kolbenmechanismus zum Gewichtsausgleich von Träger und Präsentationselement(en) besitzt im Vergleich zu einem Gegengewicht bei herkömmlichen Vorrichtungen ein relativ geringes Eigengewicht, was Vorteile bei der Mobilität bzw. der Montage der gesamten Präsentationsvorrichtung sowie bei Logistik und Transport mit sich bringt. Da das wenigstens eine Zugmittel über das wenigstens eine Umlenkelement mit dem Kolbenmechanismus in der Art eines Flaschenzuges gekoppelt ist, muss der Kolbenmechanismus im Vergleich zum Beispiel zum Prinzip des Wagenhebers zwar eine größere Kraft, aber einen deutlichen kleineren Hub bereitstellen, was die Montage des Kolbenmechanismus vereinfacht.

Vorzugsweise ist genau ein Kolbenmechanismus vorgesehen, der bevorzugt in der Breitenrichtung des Trägers im Wesentlichen mittig angeordnet ist und bevorzugt im Wesentlichen vertikal verläuft. Grundsätzlich ist auch die Verwendung mehrerer Kolbenmechanismen bei der erfindungsgemäßen Höhenpositioniervorrichtung möglich, in diesem Fall müssen die wenigstens zwei Kolbenmechanismen aber zueinander synchronisiert ausgebildet sein und betätigt werden, um den Träger für die Präsentationselemente in der gewünschten Weise zu bewegen und an einer Höhenposition zu halten.

In einer ersten Ausführungsform ist (genau) ein Zugmittel vorgesehen, das zwischen zwei Befestigungspunkten über die wenigstens eine Umlenkrolle des Flaschenzuges geführt ist, wobei die zwei Befestigungspunkte in der Breitenrichtung des Trägers im Wesentlichen mittig angeordnet sind.

In einer zweiten Ausführungsform sind zwei Zugmittel und zwei parallele Umlenkrollen des Flaschenzuges vorgesehen, wobei die zwei Zugmittel jeweils zwischen zwei Befestigungspunkten über eine der zwei parallelen Umlenkrollen des Flaschenzuges geführt sind, wobei die einen Befestigungspunkte der beiden Zugmittel auf unterschiedlichen Seiten des Trägers vorgesehen sind. Bei dieser Ausführungsform werden die beiden Seiten des Trägers für die Präsentationselemente vom Kolbenmechanismus synchron zueinander beaufschlagt, d.h. synchron bewegt und gehalten. Vorzugsweise ist der eine Befestigungspunkt jeweils in der Breitenrichtung des Trägers seitlich des Trägers angeordnet und ist der andere Befestigungspunkt jeweils in der Breitenrichtung des Trägers im Wesentlichen mittig angeordnet

In einer Ausgestaltung der Erfindung ist der pneumatische Kolbenmechanismus eine Gasdruckfeder, vorzugsweise eine gedämpfte Gasdruckfeder.

In einer weiteren Ausgestaltung der Erfindung ist das wenigstens eine Zugmittel in der Art eines einfachen Flaschenzuges geführt. Ein einfacher Flaschenzug erzielt einen optimalen Kompromiss hinsichtlich des Arbeitshubes, der Kraft und der Kosten des pneumatischen Kolbenmechanismus. Ohne Flaschenzug, d.h. bei einer Übersetzung von 1:1, wäre ein sehr großer Arbeitshub des Kolbenmechanismus erforderlich, bei einem doppelten Flaschenzug wäre eine sehr große Kraft des Kolbenmechanismus erforderlich.

In einer Ausgestaltung der Erfindung weist die Halterung ein erstes Führungselement auf und der Träger weist ein zu diesem ersten Führungselement komplementäres zweites Führungselement auf, sodass der Träger zwischen der ersten und der zweiten Höhenposition entlang der Halterung geführt ist.

Die Halterung der erfindungsgemäßen Höhenpositioniervorrichtung kann wahlweise auf einem mobilen Untergestell montiert werden oder an einem ortsfesten Element befestigt werden.

In einer weiteren Ausgestaltung der Erfindung kann an dem Träger und/oder der Halterung der Höhenpositioniervorrichtung zudem wenigstens ein weiteres Tafelelement befestigt sein. Dieses ist vorzugsweise schwenkbar / klappbar ausgebildet bzw. montiert.

Insbesondere bei einer ortsfesten Montage der erfindungsgemäßen Höhenpositioniervorrichtung zum Beispiel an einer Wandschiene oder dergleichen ist es von Vorteil, wenn an der Halterung und/oder dem Träger der Höhenpositioniervorrichtung zusätzlich wenigstens ein Haltearm oder dergleichen zur Befestigung oder Ablage wenigstens eines Peripheriegeräts (z.B. Rechner) der Präsentationselemente der Präsentationsvorrichtung vorgesehen ist.

Das wenigstens eine Präsentationselement, das an dem Träger der Höhenpositioniervorrichtung befestigt werden kann, kann zum Beispiel ausgewählt werden aus einem Bildschirm, einem (vorzugsweise interaktiven) Whiteboard, einer (vorzugsweise interaktiven) Projektionstafel, einer integrierten Einheit aus Projektionstafel und darauf gerichtetem Projektor, einer Projektionstafel und einem an einem Projektorarm befestigten und auf die Projektionstafel gerichteten Projektor, einem Projektor und dergleichen.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Seitenansicht einer Präsentationsvorrichtung mit einer Projektionstafel und einem Projektor, bei welcher die Höhenpositioniervorrichtung der vorliegenden Erfindung anwendbar ist;
- Fig. 2: eine schematische Vorderansicht einer Höhenpositioniervorrichtung gemäß einem ersten Ausführungsbeispiel der Erfindung, mit dem Träger in seiner tiefsten Höhenposition;
- Fig. 3: eine schematische Vorderansicht der Höhenpositioniervorrichtung von Fig. 2, mit dem Träger in seiner höchsten Höhenposition;
- Fig. 4: eine schematische Draufsicht der Höhenpositioniervorrichtung von Fig. 2 und 3;
- Fig. 5: eine schematische Perspektivansicht einer Höhenpositioniervorrichtung gemäß einem zweiten Ausführungsbeispiel der Erfindung, mit dem Träger in seiner tiefsten Höhenposition; und
- Fig. 6: eine schematische Perspektivansicht der Höhenpositioniervorrichtung von Fig. 5, mit dem Träger in seiner höchsten Höhenposition.

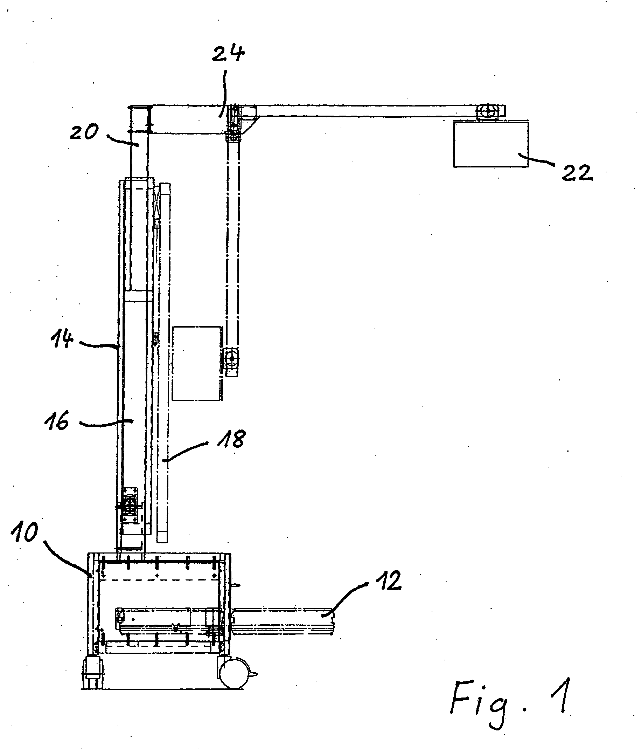

In Fig. 1 ist zunächst der Grundaufbau einer mobilen Präsentationsvorrichtung dargestellt, bei welcher die Höhenpositioniervorrichtung der Erfindung zum Einsatz kommen kann.

Die Präsentationsvorrichtung besitzt ein verfahrbares Untergestell 10 mit mehreren Fußrollen, das beispielsweise in der Form eines Möbelstücks wie eines Regalmöbels, Sideboards oder dergleichen ausgebildet ist. Durch das verfahrbare Untergestell kann die Präsentationsvorrichtung flexibel an verschiedenen Orten eingesetzt werden und es muss zum Beispiel nicht für jedes Klassenzimmer oder jeden Besprechungsraum eine eigene Präsentationsvorrichtung angeschafft werden.

Das Untergestell 10 weist vorzugsweise mehrere Aufnahmen 12 auf, die beispielsweise in der Form eines Faches oder einer Schublade ausgebildet sind und vorzugsweise verschließbar, bevorzugter zudem abschließbar sind. Die Aufnahmen 12 des Untergestells 10 dienen insbesondere der Aufnahme von Peripheriegeräten der Präsentationselemente dieser Präsentationsvorrichtung. Zu den Peripheriegeräten zählen beispielsweise ein Steuergerät, ein Rechner, ein Drucker und dergleichen. Im Fall von interaktiven Präsentationselementen sind als Peripheriegeräte auch Stifte, Zeigegeräte und dergleichen zum Aktivieren einer Projektionsfläche durch den/die Benutzer zu nennen.

Wie in Fig. 1 angedeutet, kann eine der Aufnahmen 12 zum Beispiel eine Ablage / Auflage für einen Rechner, ein Notebook und dergleichen enthalten, die zum Beispiel mittels Gasdruckfedern höhenverstellbar ausgebildet ist. Auf diese Weise wird dem Benutzer zum Beispiel eine Notebook-Auflage in einer für die Bedienung optimalen Arbeitshöhe zur Verfügung gestellt.

In dem verfahrbaren Untergestell 10 sind ferner auch die elektrischen Anschlüsse für die Präsentationselemente sowie das komplette Kabelmanagement untergebracht. Zu den elektrischen Anschlüssen zählen insbesondere Anschlüsse für die Stromversorgung und die Kommunikation der Präsentationselemente untereinander und mit anderen Geräten und Netz(werken). Auch sind vorzugsweise unterschiedliche und jeweils mehrere solche Anschlüsse vorgesehen.

An bzw. auf diesem Untergestell ist eine Höhenpositioniervorrichtung angeordnet und befestigt. Diese Höhenpositioniervorrichtung umfasst insbesondere eine Halterung oder Tragkonstruktion 14 und einen Träger 16. Die Halterung 14 weist in den hier dargestellten Ausführungsbeispielen zwei parallele Pylonen bzw. Säulen auf, an denen der Träger 16 zwischen einer ersten und einer zweiten Höhenposition verschiebbar gelagert ist. Der Träger 16 ist im Wesentlichen plattenförmig oder rahmenförmig ausgebildet.

Die vorliegende Erfindung ist nicht nur auf diese Halterung 14 beschränkt. Die Halterung 14 kann zum Beispiel auch nur einen Pylonen oder mehr als zwei Pylonen aufweisen. Anstelle von Pylonen können auch andere Säulen, Stützen, Tragelemente und dergleichen verwendet werden.

An dem Träger 16 der Höhenpositioniervorrichtung können ein oder mehrere Präsentationselemente befestigt werden. In dem Ausführungsbeispiel von Fig. 1 sind an dem Träger 14 eine Projektionstafel 18, vorzugsweise eine interaktive Projektionstafel, sowie eine Projektorhalterung 20 mit einem daran montierten Projektor 22 befestigt. In der Betriebsstellung des Projektors 22 (durchgezogene Linien in Fig. 1) befindet sich dieser an einer vorbestimmten Position oberhalb der Projektionstafel 18.

Die Projektorhalterung 20 ist vorzugsweise so ausgebildet, dass der Projektor in eine Nichtgebrauchsstellung (strichpunktierte Linien in Fig. 1) vor die Projektionstafel 18 nach unten abgeklappt werden kann. Zu diesem Zweck weist die Projektorhalterung 20 zum Beispiel ein spezielles Gelenk 24 oder dergleichen auf. Insbesondere bei mobilen Präsentationsvorrichtungen ist es wichtig, den Projektor 22 bei Nichtgebrauch zu schützen und die Gesamtabmessungen der Vorrichtung für den Transport zu begrenzen. So kann die Präsentationsvorrichtung mit dem abgeklappten und in dieser Nichtbetriebsstellung geschützten Projektor 22 durch Türen mit Standardmaßen gefahren werden und nimmt bei Nichtgebrauch weniger Raum ein.

In diesem Ausführungsbeispiel sind die Präsentationselemente eine interaktive Projektionstafel und ein auf diese gerichteter Projektor. Selbstverständlich können im Rahmen der Erfindung auch andere Präsentationselemente bzw. andere Kombinationen von Präsentationselementen an dem Träger 16 der Höhenpositioniervorrichtung befestigt werden. Mögliche andere Präsentationselemente sind zum Beispiel ein Bildschirm, ein Whiteboard, eine Projektionstafel, eine integrierte Einheit aus Projektionstafel und darauf gerichtetem Projektor, ein Projektor und dergleichen.

Ferner ist die vorliegende Erfindung nicht auf die Befestigung des Projektors 22 über einen nach unten abklappbaren Projektorarm 20 beschränkt. Alternativ kann auch ein starrer Projektorarm oder ein seitlich, d.h. um eine im Wesentlichen vertikale Achse schwenkbarer Projektorarm verwendet werden. Außerdem kann auch eine Teleskoptechnik für den Projektorarm zum Einsatz kommen.

Die Höhenpositioniervorrichtung der vorliegenden Erfindung wird hier am Beispiel der Verwendung bei einer mobilen Präsentationsvorrichtung beschrieben, bei welcher die Höhenpositioniervorrichtung auf bzw. an einem mobilen Untergestell montiert ist. Die vorliegende Erfindung ist aber nicht nur auf diese Ausführungsform beschränkt. Die Höhenpositioniervorrichtung der Erfindung kann ebenso an einem ortsfesten Element wie zum Beispiel einer Gebäudewand, einer Raumtrennwand, einem Schrankelement oder dergleichen angebracht werden. Ferner kann die Höhenpositioniervorrichtung auch an einer Wandschiene, die an einem der genannten ortsfesten Elemente befestigt ist, montiert bzw. eingehängt werden, sodass die Höhenpositioniervorrichtung und damit auch die gesamte Präsentationsvorrichtung im Rahmen der Wandschiene seitlich verschoben werden kann.

Während in dem Ausführungsbeispiel von Fig. 1 einer mobilen Präsentationsvorrichtung mit einem verfahrbaren Untergestell vorzugsweise mehrere Aufnahmen, Ablagen oder dergleichen an diesem Untergestell vorgesehen sind, ist dies bei einer alternativen Präsentationsvorrichtung der Erfindung, die an einer Wandschiene, einem ortsfesten Element oder dergleichen montierbar ist, nicht möglich. In diesem Fall ist es von Vorteil, wenn an der Halterung 14 der Höhenpositioniervorrichtung, über welche die Präsentationsvorrichtung zum Beispiel an einer Wandschiene eingehängt werden kann, eine Zusatzeinrichtung zum Beispiel in Form eines schwenkbaren und/oder höhenverstellbaren Arms angebracht ist, der eine Ablage oder eine Befestigungsmöglichkeit zum Beispiel für ein Notebook zum Ansteuern der Präsentationselemente 18, 22 der Präsentationsvorrichtung aufweist. Die elektrischen Anschlüsse und Kommunikationsverbindungen sind entsprechend in der Halterung 14 untergebracht.

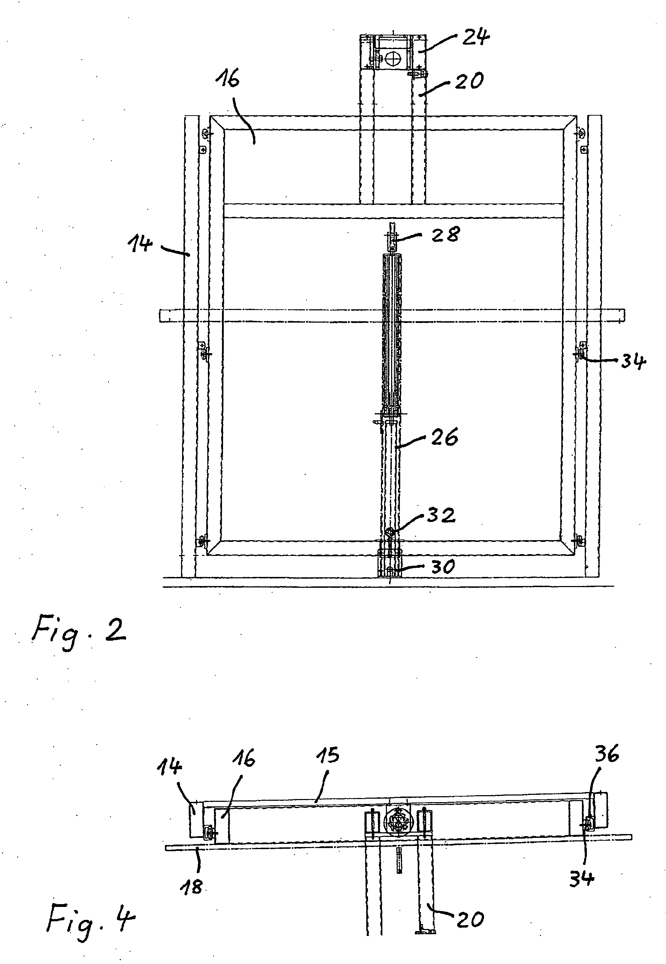

Bezug nehmend auf Fig. 2 bis 4 wird nun eine Höhenpositioniervorrichtung gemäß einem ersten Ausführungsbeispiel näher erläutert, die bei der in Fig. 1 dargestellten Präsentationsvorrichtung eingesetzt ist.

Wie in Fig. 2 bis 4 zu erkennen, weist die Halterung 14 ein erstes Führungselement 36 in Form einer im Wesentlichen vertikal verlaufenden Führungsschiene auf und der Träger 16 ist mit mehreren Laufrollen 34 als zweites Führungselement versehen. Das erste und das zweite Führungselement 34, 36 sind nicht auf diese Kombination von Führungsschiene und Laufrollen beschränkt; es können zum Beispiel auch zwei ineinander laufende Führungsschienen vorgesehen sein. Die beiden Führungselemente müssen nur jeweils zueinander passen, d.h. komplementär zueinander ausgebildet und/oder angeordnet sein.

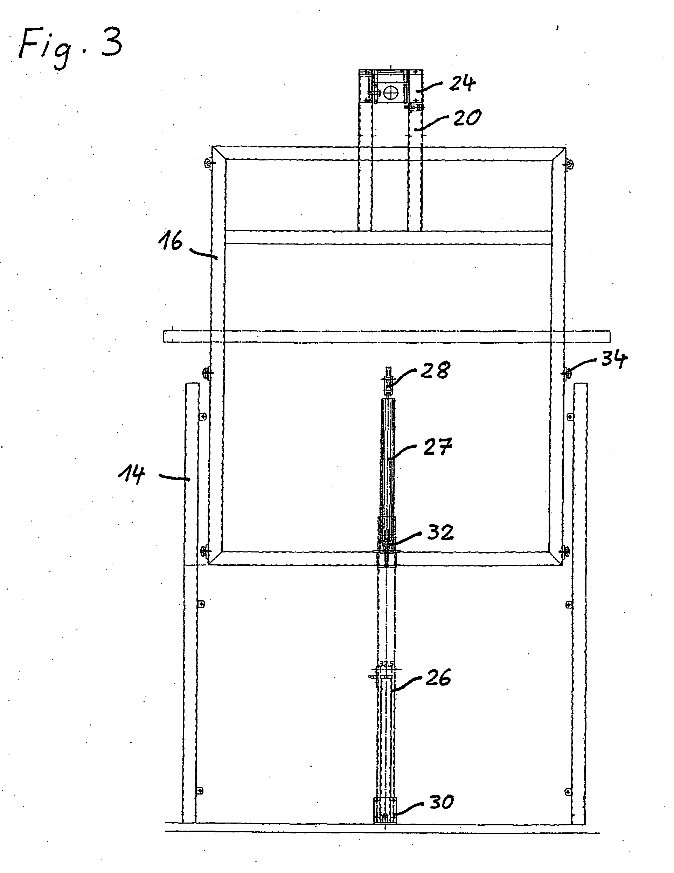

Die Höhenpositioniervorrichtung weist ferner einen pneumatischen Kolbenmechanismus in Form einer Gasdruckfeder 26, vorzugsweise einer gedämpften Gasdruckfeder auf. In dem Ausführungsbeispiel von Fig. 2 und 4 ist die eine Gasdruckfeder 26 in der Breitenrichtung der Höhenpositioniervorrichtung (Rechts-Links-Richtung in Fig. 2 bis 4) im Wesentlichen mittig angeordnet. Dabei ist die Kolbenstange 27 der Gasdruckfeder 26 in der tiefsten Höhenposition des Trägers 16 (Fig. 2) eingefahren und in seiner höchsten Höhenposition (Fig. 3) ausgefahren.

Das untere Ende der Gasdruckfeder 26 stützt sich gegen einen Abstützwinkel 30 ab, der im Fall der mobilen Präsentationsvorrichtung an der Halterung 14 oder am Untergestell 10 befestigt sein kann. Im Fall einer ortsfesten Montage der Präsentationsvorrichtung ist dieser Abstützwinkel 30 zum Beispiel an der Halterung 14 oder einer Gebäudewand befestigt. Dieser Abstützwinkel 30 ist allgemein an einem höhenfesten Element befestigt, d.h. er bewegt sich nicht mit dem Träger bei seiner Bewegung in vertikaler Richtung mit. Der Abstützwinkel 30 bildet außerdem einen Befestigungspunkt für ein Ende eines Zugmittels.

Am anderen Ende (oben in Fig. 2 und 3) der Gasdruckfeder 26 ist eine Umlenkrolle 28 angebracht. Außerdem ist das untere Ende des Trägers 16 mit der Kolbenstange 27 der Gasdruckfeder 26 gekoppelt, sodass die Kolbenstange 27 beim Hochschieben des Trägers 16 ausgefahren und beim Nach-Unten-Schieben des Trägers 16 eingefahren wird. Im Bereich dieser Kopplung ist außerdem ein zweiter Befestigungspunkt 32 für das Zugmittel vorgesehen.

Das flexible Zugmittel (nicht dargestellt in Fig. 2 bis 4), zum Beispiel ein seilartiges, riemenartiges oder kettenartiges Zugmittel, läuft zwischen dem höhenfesten ersten Befestigungspunkt am Abstützwinkel 30 der Gasdruckfeder 26 und dem sich mit dem Träger 16 mit bewegenden zweiten Befestigungspunkt 32 über die Umlenkrolle 28. Auf diese Weise wird ein einfacher Flaschenzug gebildet, bei dem der Hub der Gasdruckfeder 26 bzw. ihrer Kolbenstange 27 in einem Übersetzungsverhältnis von 1:2 auf die Höhenverschiebung des Trägers 16 übertragen wird.

Die Gasdruckfeder 26 ist so konzipiert, dimensioniert bzw. eingestellt, dass ihre Federkraft im Wesentlichen die gesamte Gewichtskraft des Trägers 16 und der daran befestigten Präsentationselemente 18, 22 sowie deren Montagemittel 20, 24 ausgleicht. Der Träger 16 kann somit vom Benutzer einfach zwischen seinen beiden Höhenendpositionen stufenlos verschoben werden und die gewünschte Höhenposition wird dann durch die Gasdruckfeder 26 sicher beibehalten.

Aufgrund des Flaschenzugprinzips ist zwar eine größere Federkraft der Gasdruckfeder 26 erforderlich, um das Gesamtgewicht von Träger 16 und Präsentationselementen 18 bis 24 auszugleichen, aber es genügt eine Gasdruckfeder 26 mit einem kleineren Hub, was insgesamt einen wesentlichen Bauraumvorteil bietet.

Wie in Fig. 4 zu erkennen, ist auf der der Projektionstafel 18 abgewandten Seite des Trägers 16 zudem vorzugsweise eine Blende 15 angeordnet, sodass die Gasdruckfeder 26, die Umlenkrolle 28 und das Zugmittel für den Benutzer nicht sichtbar und nicht zugänglich sind, um eine ansprechende Optik vorzusehen und die Verletzungsgefahr für den Benutzer zu minimieren.

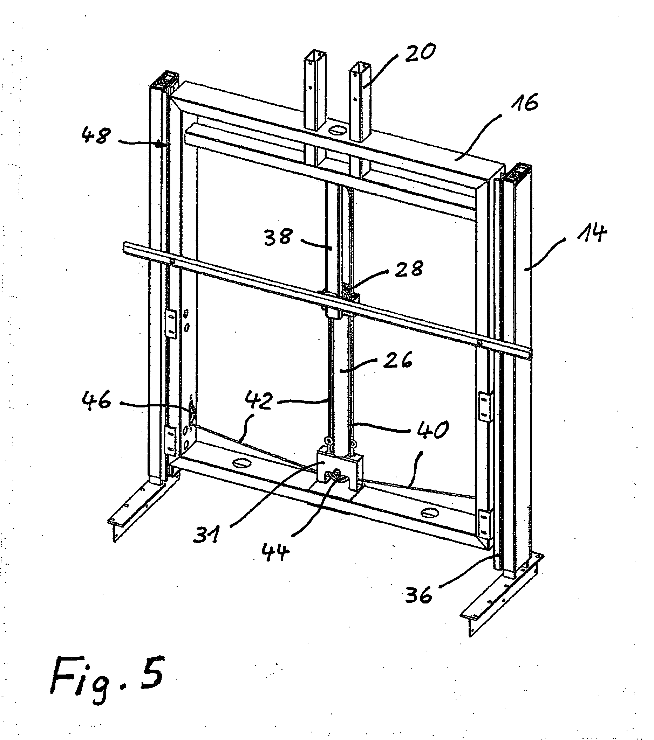

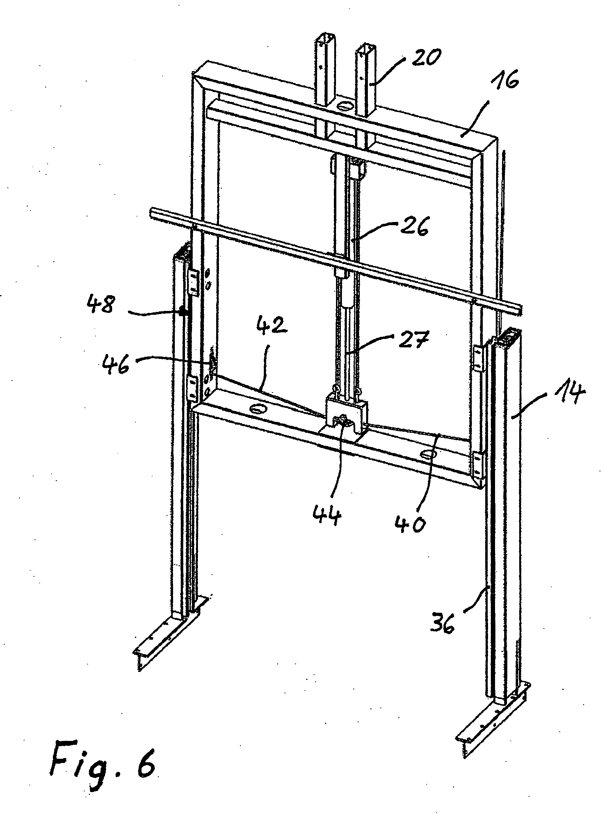

Unter Bezug auf Fig. 5 und 6 wird nun ein zweites Ausführungsbeispiel einer Höhenpositioniervorrichtung der Erfindung näher erläutert. Dabei sind die gleichen Komponenten mit den gleichen Bezugsziffern wie im ersten Ausführungsbeispiel gekennzeichnet und auf eine Wiederholung ihrer näheren Beschreibung wird nachfolgend größtenteils verzichtet.

Fig. 5 zeigt den Träger 16 der Höhenpositioniervorrichtung in seiner tiefsten Höhenendposition und Fig. 6 zeigt den Träger in seiner höchsten Höhenendposition. An dem Träger 16 können analog zum obigen ersten Ausführungsbeispiel wieder ein oder mehrere Präsentationselemente befestigt werden. Außerdem ist auch diese Höhenpositioniervorrichtung wahlweise an bzw. auf einem verfahrbaren Untergestell oder an einem ortsfesten Element (Gebäudewand, Schrank, usw.) montierbar.

Das zweite Ausführungsbeispiel der Höhenpositioniervorrichtung unterscheidet sich von der in Fig. 2 bis 4 dargestellten Höhenpositioniervorrichtung durch eine synchrone Unterstützung des Trägers 16 auf seinen beiden Seiten. Aufgrund dieser synchronen Unterstützung der beiden Trägerseiten werden an die ersten und zweiten Führungselemente 34, 36 von Halterung 14 und Träger 16 geringere Anforderungen gestellt, da die vertikale Bewegung des Trägers zwischen seinen beiden Höhenendpositionen ohne Verkanten des Trägers 16 durchgeführt wird.

Die Höhenpositioniervorrichtung weist, wie in Fig. 5 und 6 veranschaulicht, zu diesem Zweck einen pneumatischen Kolbenmechanismus 26 in Form einer Gasdruckfeder, vorzugsweise einer gedämpften Gasdruckfeder auf, der analog zum ersten Ausführungsbeispiel in der Breitenrichtung des Trägers 16 (Rechts-Links-Richtung in Fig. 5 und 6) im Wesentlichen mittig angeordnet ist und sich im Wesentlichen vertikal erstreckt. Die Gasdruckfeder 26 ist so positioniert, dass ihre Kolbenstange 27 nach unten ausfährt und in der tiefsten Höhenposition des Trägers 16 (Fig. 5) eingefahren und in der höchsten Höhenposition des Trägers 16 (Fig. 6) ausgefahren ist.

Die Gasdruckfeder 26 stützt sich mit ihrem unteren Ende, d.h. mit ihrer Kolbenstange 27, an einem Abstützblock 31 ab, der an dem Träger 16 (oder wahlweise an einem anderen sich mit dem Träger 16 bewegenden Element) angebracht ist. Dieser Abstützblock 31 dient gleichzeitig als ein Befestigungspunkt für die beiden noch zu beschreibenden Zugmittel 40, 42.

Die Hülse der Gasdruckfeder 26 ist an einer zum Beispiel schienenartigen Führung 38 geführt, welche fest am Träger 16 angeordnet ist. Am oberen Ende der Gasdruckfeder 26, d.h. an ihrem der Kolbenstange 27 abgewandten Ende, sind zwei Umlenkrollen 28 vorgesehen, die bevorzugt parallel zueinander auf einer gemeinsamen Drehachse angeordnet sind.

In den Abstützblock 31 am Träger 16 sind zwei weitere (zweite) Umlenkrollen 44 integriert, die ebenfalls bevorzugt parallel zueinander auf einer gemeinsamen Drehachse angeordnet sind. Zwei dritte Umlenkrollen 46 sind jeweils auf einer Seite des Trägers 16 vorgesehen, und zwei weitere Befestigungspunkte 48 für die Zugmittel 40, 42 sind jeweils auf einer Seite an der Halterung 14 in einer Höhe oberhalb der dritten Umlenkrollen 46 in der höchsten Höhenposition des Trägers 16 angel ordnet.

Ein erstes Zugmittel 40 verläuft von dem ersten Befestigungspunkt am Abstützblock 31 nach oben zu einer der beiden Umlenkrollen 28, wo es um 180° umgelenkt wird und wieder nach unten zu einer der beiden zweiten Umlenkrollen 44 geführt wird, sodass ein einfacher Flaschenzug gebildet wird. Von der zweiten Umlenkrolle 44 wird das erste Zugmittel 40 im Wesentlichen um etwa 90° zu einer Seite (nach rechts in Fig. 5 und 6) des Trägers 16 geführt, wo es die dritte Umlenkrolle 46 im Wesentlichen um etwa 90° umschlingt. Von dieser dritten Umlenkrolle 46 erstreckt sich das erste Zugmittel 40 nach oben zum zweiten Befestigungspunkt 46 auf der einen Seite (rechts in Fig. 5 und 6) der Halterung 14 der Höhenpositioniervorrichtung.

In analoger Weise verläuft ein zweites flexibles Zugmittel 42 von dem ersten Befestigungspunkt am Abstützblock 31 nach oben zur anderen ersten Umlenkrolle 28 des einfachen Flaschenzuges, von dort nach unten zur anderen zweiten Umlenkrolle 44, von dort weiter zur anderen Seite (nach links in Fig. 5 und 6) des Trägers 16 bis zur anderen dritten Umlenkrolle 46, und von dort schließlich nach oben zum zweiten Befestigungspunkt 48 an der anderen Seite (links in Fig. 5 und 6) an der Halterung 16.

Wird der Träger 16 (mit den daran befestigten Präsentationselementen) ausgehend von seiner tiefsten Höhenposition in Fig. 5 nach oben bewegt, so wird der Weg des Zugmittels 40, 42 vom höhenfesten Befestigungspunkt 48 an der Halterung 16 zur zweiten Umlenkrolle 44 im Abstützblock 31 verkürzt. Zum Ausgleich wird der Abstand zwischen dem Abstützblock 31 und der ersten Umlenkrolle 28 des Flaschenzuges durch Ausfahren der Kolbenstange 27 der Gasdruckfeder 26 um die Hälfte der erstgenannten Wegänderung verlängert. Die Funktionsweise beim Absenken des Trägers 16 ist anlog in umgekehrter Weise.

Jedes der beiden Zugmittel 40, 42 unterstützt bzw. hält eine der beiden Seiten des Trägers 16, sodass eine synchrone Höhenpositionierung erfolgt, wobei hierzu nur eine zentrale Gasdruckfeder 26 erforderlich ist. Selbst wenn der Benutzer den Träger 16 bzw. die daran befestigte Projektionstafel 18 zur Höhenverstellung an einer Seite angreift, wird der gesamte Träger 16 mit diesem Aufbau ohne Verkanten gleichmäßig nach oben bewegt. Grundsätzlich wäre es auch denkbar, auf beiden Seiten des Trägers 16 jeweils eine Gasdruckfeder 26 anzuordnen. Allerdings würde die Verwendung von zwei Gasdruckfedern 26 die Gesamtkosten der Höhenpositioniervorrichtung erhöhen.

In den oben beschriebenen Ausführungsbeispielen ist jeweils eine Gasdruckfeder vorgesehen, die in Breitenrichtung der Vorrichtung im Wesentlichen mittig angeordnet ist und im Wesentlichen vertikal verläuft. Die vorliegende Erfindung ist aber nicht auf diese Ausführungsform beschränkt. Wie bereits erwähnt, ist grundsätzlich auch das Vorsehen mehrerer Gasdruckfedern denkbar, auch wenn dies die Gesamtkosten der Höhenpositioniervorrichtung erhöht. Des Weiteren muss die eine Gasdruckfeder nicht mittig bzw. müssen die ggf. mehreren Gasdruckfedern nicht symmetrisch zur Mitte angeordnet sein. Ebenso ist es nicht zwingend erforderlich, dass die Gasdruckfeder(n) vertikal verläuft/verlaufen; sie kann/können z.B. auch in einem Winkel zur Vertikalen montiert sein. Die gewünschte Bewegung des Trägers und insbesondere seine synchrone Bewegung der rechten und linken Seite in vertikaler Richtung werden in allen Fällen durch die Zugmittel (Anordnung, Länge, Befestigungspunkte) und auch die Führungselemente bewirkt.

In Fig. 5 und 6 sind zudem zwei Montagestreben 13 der Halterung 14 erkennbar, mit denen die erfindungsgemäße Höhenpositioniervorrichtung auf einem verfahrbaren Untergestell 10 (siehe Fig. 1) oder dergleichen befestigt werden kann. Soll die Präsentationsvorrichtung dagegen zum Beispiel an einer Wandschiene oder dergleichen eingehängt werden können, so entfallen diese Montagestreben 13 am unteren Ende der Halterung 14 und statt dessen sind im oberen Bereich der Halterung 14 entsprechende Befestigungsvorrichtungen vorgesehen.

Die Höhenpositioniervorrichtung der Erfindung für eine Präsentationsvorrichtung kann daher mit einem einfachen und minimalen Umbau wahlweise als eine mobile Vorrichtung zum Beispiel auf einem verfahrbaren Untergestell oder als ortsfeste oder definiert verschiebbare Vorrichtung zum Beispiel an einer Wandschiene eingesetzt werden. Der Grundaufbau der erfindungsgemäßen Höhenpositionjervorrichtung muss hierzu nicht modifiziert werden; die erfindungsgemäße Höhenpositioniervorrichtung für eine Präsentationsvorrichtung zeichnet sich durch ihre universellen Einsatzmöglichkeiten aus.

In den oben erläuterten Ausführungsbeispielen ist an dem höhenverschiebbaren Träger 16 der erfindungsgemäßen Höhenpositioniervorrichtung jeweils eine (vorzugsweise interaktive) Projektionstafel 18 befestigt. Optional können an der Höhenpositioniervorrichtung bzw. der Präsentationsvorrichtung der Erfindung auch noch weitere Tafelelemente angebracht werden.

Solche weiteren Tafelelemente sind zum Beispiel als gewöhnliche Schreibtafeln oder Magnettafeln ausgebildet und können rechts, links, unter und/oder über der Projektionstafel 18 positioniert sein. Vorzugweise werden diese weiteren Tafelelemente gemeinsam mit der Projektionstafel in ihrer Höhe verstellt. Zu diesem Zweck können sie beispielsweise an der Projektionstafel 18 selbst oder - als stabilere Lösung - an dem höhenverschiebbaren Träger 16 montiert sein. Die zum Beispiel in Fig. 4 dargestellten Profile von Halterung 14 und Träger 16 können problemlos so angepasst werden, dass die Montage weiterer Tafelelemente möglich ist.

Außerdem sind die weiteren Tafelelemente vorzugsweise schwenkbar ausgebildet bzw. an Träger 16 oder Projektionstafel 18 befestigt. Bei einer Montage auf der rechten oder linken Seite der Projektionstafel 18 sind die weiteren Tafelelemente z.B. um eine vertikale Achse schwenkbar, sodass sie vor die Projektionstafel 18 geklappt werden können.

### BEZUGSZIFFERNLISTE

- 10: Untergestell
- 12: Schublade
- 13: Montagestreben
- 14: Halterung
- 15: Blende
- 16: Träger
- 18: Projektionstafel
- 20: Projektorhalterung
- 22: Projektor
- 24: Gelenk
- 26: Gasdruckfeder
- 27: Kolbenstange von 26
- 28: Umlenkrolle
- 30: Abstützwinkel
- 31: Abstützblock
- 32: Befestigung Zugmittel
- 34: Laufrollen
- 36: Führungsschiene
- 38: Führung für 26
- 40: Zugmittel
- 42: Zugmittel
- 44: Umlenkrollen
- 46: Umlenkrollen
- 48: Befestigung Zugmittel

## Patentansprüche

1. Höhenpositioniervorrichtung für eine Präsentationsvorrichtung, mit
- einem Träger (16), an dem wenigstens ein Präsentationselement (18, 22) befestigbar ist;
- einer Halterung (14), an welcher der Träger (16) zwischen einer ersten und einer zweiten Höhenposition verschiebbar angebracht ist;
- wenigstens einem flexiblen Zugmittel (40, 42), dessen eines Ende an dem Träger (16) bzw. einem mit dem Träger bewegbaren Element (31, 32) befestigt ist und dessen anderes Ende an der Halterung (14) bzw. einem höhenfesten Element (30, 48) befestigt ist;
- wenigstens einem Umlenkelement (28), um welches das wenigstens eine Zugmittel (40, 42) in der Art eines Flaschenzuges geführt ist; und
- einem pneumatischen Kolbenmechanismus (26), an dessen einem Ende das wenigstens eine Umlenkelement (28) befestigt ist und dessen anderes Ende so an der Halterung (14) bzw. einem höhenfesten Element (30) oder an dem Träger (16) bzw. einem mit dem Träger bewegbaren Element (31) abgestützt ist, dass der Kolbenmechanismus (26) ein Gesamtgewicht des Trägers (14) und des wenigstens einen daran befestigbaren Präsentationselements (18, 22) im Wesentlichen ausgleicht, um den Träger (14) an einer beliebigen Position zwischen der ersten und der zweiten Höhenposition zu halten.

2. Höhenpositioniervorrichtung nach Anspruch 1,
**dadurch gekennzeichnet,**
**dass** ein Kolbenmechanismus (26) vorgesehen ist.

3. Höhenpositioniervorrichtung nach Anspruch 1 oder 2,
**dadurch gekennzeichnet,**
**dass** ein Zugmittel vorgesehen ist, das zwischen zwei Befestigungspunkten (30, 32) über die wenigstens eine Umlenkrolle (28) des Flaschenzuges geführt ist, wobei die zwei Befestigungspunkte (30, 32) in der Breitenrichtung des Trägers (14) im Wesentlichen mittig angeordnet sind.

4. Höhenpositioniervorrichtung nach Anspruch 1 oder 2,
**dadurch gekennzeichnet,**
**dass** zwei Zugmittel (40, 42) und zwei parallele Umlenkrollen (28) des Flaschenzuges vorgesehen sind, wobei die zwei Zugmittel (40, 42) jeweils zwischen zwei Befestigungspunkten (31, 48) über eine der zwei parallelen Umlenkrollen (28) des Flaschenzuges geführt sind, wobei die einen Befestigungspunkte (48) der beiden Zugmittel (40, 42) auf unterschiedlichen Seiten des Trägers (14) vorgesehen sind.

5. Höhenpositioniervorrichtung nach einem der vorherigen Ansprüche,
**dadurch gekennzeichnet,**
**dass** der pneumatische Kolbenmechanismus (26) eine Gasdruckfeder, vorzugsweise eine gedämpfte Gasdruckfeder ist.

6. Höhenpositioniervorrichtung nach einem der vorherigen Ansprüche,
**dadurch gekennzeichnet,**
**dass** das wenigstens eine Zugmittel (40, 42) in der Art eines einfachen Flaschenzuges geführt ist.

7. Höhenpositioniervorrichtung nach einem der vorherigen Ansprüche,
**dadurch gekennzeichnet,**
**dass** die Halterung (14) ein erstes Führungselement (36) aufweist und der Träger (16) ein zu diesem ersten Führungselement (36) komplementäres zweites Führungselement (34) aufweist, sodass der Träger (16) zwischen der ersten und der zweiten Höhenposition entlang der Halterung (14) geführt ist.

8. Höhenpositioniervorrichtung nach einem der Ansprüche 1 bis 7,
**dadurch gekennzeichnet,**
**dass** die Halterung (14) auf einem mobilen Untergestell (12) montierbar ist.

9. Höhenpositioniervorrichtung nach einem der Ansprüche 1 bis 7,
**dadurch gekennzeichnet,**
**dass** die Halterung (14) an einem ortsfesten Element montierbar ist.

10. Höhenpositioniervorrichtung nach einem der vorherigen Ansprüche,
**dadurch gekennzeichnet,**
**dass** an dem Träger (16) und/oder der Halterung (14) wenigstens ein weiteres Tafelelement befestigt ist.

11. Höhenpositioniervorrichtung nach einem der vorherigen Ansprüche,
**dadurch gekennzeichnet,**
**dass** an der Halterung (14) und/oder dem Träger (16) wenigstens eine Einrichtung zum Befestigen oder Ablegen wenigstens eines Peripheriegeräts der Präsentationselemente (18, 22) der Präsentationsvorrichtung vorgesehen ist.

12. Höhenpositioniervorrichtung nach einem der vorherigen Ansprüche,
**dadurch gekennzeichnet,**
**dass** das wenigstens eine Präsentationselement (18; 22) ausgewählt ist aus einem Bildschirm, einem Whiteboard, einer Projektionstafel, einer integrierten Einheit aus Projektionstafel und darauf gerichtetem Projektor, einer Projektionstafel und einem an einem Projektorarm befestigten und auf die Projektionstafel gerichteten Projektor, einem Projektor und dergleichen.
